# FASCICULE DE BREVET EUROPEEN

(11) **EP 0 554 231 B1**
(45) Date de publication et mention de la délivrance du brevet: **12.06.1996**
(21) Numéro de dépôt: 93870009.3
(22) Date de dépôt: 20.01.1993
(51) Int. Cl.: C13F 3/00, C13F 3/02, C13F 5/00, A21D 13/00

(54) **Sucre perle, procédé pour sa fabrication et utilisation dans le secteur alimentaire**
Hagelzucker, Verfahren zur Herstellung desselben und Verwendung desselben in der Nährungsmittelnindustrie
Sugar hail, process for preparing it and its use in food industry

(30) Priorité: 24.01.1992 BE 9200076
(43) Date de publication de la demande: 04.08.1993
(73) Titulaire: "Raffinerie Tirlemontoise", société anonyme:, 1150 Bruxelles (BE)
(72) Inventeur: Willems, Marc, B-3300 Tienen (BE); Lefevre, Jacques, B-1357 Helecine (BE)
(74) Mandataire: Van Malderen, Michel

(56) Documents cités:
- FR-A- 400 110
- FR-A- 623 344
- FR-A- 840 791

## Description

### Objet de l'invention

La présente invention concerne un sucre perlé ayant une dureté et une résistance à la dissolution accrue tout en maintenant un aspect cristallin. L'invention concerne également son procédé de préparation et son utilisation dans le secteur alimentaire.

L'invention vise à obtenir un sucre perlé pour lequel, lors de la production de denrées alimentaires telles que par exemple de gaufres de Liège, des pains d'épices, des biscuits, des craquelins, des brioches, des gâteaux, des gâteaux de Verviers, etc., on peut maintenir l'apparence du sucre perlé, car il ne se dissout et ne se fragmente pas, ce qui se traduit en une pâte qui est plus facile à travailler et des denrées alimentaires moins colorées, sans contours noirs et qui contiennent des perles en bon état.

### Arrière-plan technologique et état de la technique

Le sucre perlé, actuellement sur le marché, est fabriqué de différentes façons. Une méthode consiste à mélanger du sucre type 1 C.E.E. (voir règlement C.E.E. 2103/77) à du sirop de sucre. La "masse cuite" ainsi constituée est essorée pour permettre au sirop de cristalliser entre les grains. Les plaques de sucre obtenues sont séchées puis mises en maturation prolongée. Après broyage et séparation des poussières, les morceaux de sucre sont polis par abrasion dans des blutoirs cylindriques. Le sucre est enfin tamisé en 6 granulométries différentes et dépoussiéré avant l'ensachage.

Un désavantage de ce sucre perlé est qu'il se dissout et se fragmente facilement lors de sa mise en oeuvre, comme par exemple dans des "gaufres de Liège". En plus, le sucre perlé ainsi obtenu est coloré et ne satisfait donc plus aux normes du sucre type 1 C.E.E.

Selon un autre procédé, le sucre est compacté sous une très haute pression jusqu'à 5.000 kg.cm⁻¹. Ce système a le désavantage de ne pas permettre de travailler du sucre ayant une teneur en eau supérieure à 1,5% lors de l'agglomération. De plus, le sucre est pulvérisé et forme un agglomérat de poussière qui a perdu tout aspect cristallin. A une humidité supérieure, le sucre colle dans le compacteur.

Les problèmes de qualité du sucre perlé actuel se résument en un problème de dureté, de solubilité, d'aspect cristallin et de couleur.

A cause de la dureté insuffisante, c'est-à-dire de la faible résistance mécanique des perles, celles-ci forment facilement de la poussière pendant la production, l'emballage, la palettisation, le transport et la mise en oeuvre par l'utilisateur dans le secteur alimentaire. Cette poussière provoque aussi bien une perte de production pour le producteur, qu'une perte sur les matières premières pour l'utilisateur. En plus, cette poussière, associée à une assez grande solubilité des perles résulte, lors notamment de la préparation de "gaufres de Liège" en une pâte de moindre qualité. Il est plus difficile de travailler la pâte (qui est plus collante et lève moins facilement).

A cause de la plus grande solubilité des perles, il faut mettre plus de perles en oeuvre pour obtenir un produit fini, dans lequel on souhaite que des perles entières soient maintenues.

Le brevet FR-A623 344 décrit un procédé de fabrication de plaques de sucre en sucre cristallisé par addition d'une solution saturée ou sursaturée de sucre blanc à des cristaux de sucre ou à une masse cuite de sucrerie.

Le brevet FR-A-840 791 décrit un procédé de fabrication de sucre en morceaux consistant à humecter du sucre granulé avec une solution faiblement alcaline, à sécher le produit et à le diviser en morceaux.

Le brevet FR-A-400 110 décrit un procédé de fabrication de sucre moulé par pression en barreaux, en morceaux ou en pains.

### Buts de l'invention

Le but visé par l'invention est de disposer d'un sucre perlé présentant une dureté supérieure et une solubilité plus réduite, comparé au sucre perlé actuel, tout en maintenant un aspect cristallin de perles dans les produits finis, tels que par exemple les gaufres de Liège, les pains d'épices, des biscuits, des craquelins, des brioches, des gâteaux, des gâteaux de Verviers, etc., en vue d'apporter une solution adéquate aux problèmes actuels mentionnés ci-dessus des produits connus.

On vise également à obtenir un nouveau sucre perlé qui résulte en une productivité accrue et une qualité supérieure aussi bien lors de sa production que lors de sa mise en oeuvre dans des produits alimentaires.

### Eléments caractéristiques principaux de l'invention

Pour résoudre les problèmes associés au sucre perlé actuel, la Demanderesse a entrepris des recherches approfondies qui ont abouti à la production d'un nouveau sucre perlé répondant parfaitement aux exigences posées: une dureté accrue, une solubilité plus réduite tout en maintenant un aspect cristallin.

Un sucre perlé convenant pour la préparation de denrées alimentaires et maintenant l'apparence du sucre perlé qui présente un temps de dissolution supérieur à 12 minutes, et un aspect cristallin, correspond à ces exigences.

De préférence, ce sucre perlé présente une résistance à l'écrasement minimale de 4 bar.

Préférentiellement, ce sucre perlé présente une coloration ICUMSA maximale de 20. Il peut être obtenu par un procédé de fabrication comportant un compactage du sucre ayant une teneur en eau comprise entre 2 et 4,5%, pour obtenir un poids spécifique compris entre 1,29 et 1,50 g.cm⁻³ et une maturation du sucre ayant une teneur en eau de 0,75 à 2%.

De préférence, on procède à une humidification du sucre avant le compactage, pour obtenir une teneur en eau du sucre comprise entre 2 et 4,5% et on procède à un séchage du sucre compacté avant maturation pour atteindre une teneur en eau de 0,75 à 2%.

### Description détaillée de l'invention

Dans la production du nouveau sucre perlé, on peut distinguer différentes étapes successives, à savoir l'humidification, la compression, le séchage et la maturation, suivies éventuellement d'un broyage, d'un arrondis sage et d'un tamisage.

Dans une première étape, le sucre est humidifié aussi uniformément que possible, jusqu'à atteindre une teneur en eau comprise entre 2 et 4,5%. On peut travailler aussi bien à température élevée qu'à température ambiante. Il est toute fois évident que travailler à une température trop élevée pourrait donner lieu à une coloration du sucre.

Après cette humidification, le sucre est compacté à une pression telle que le poids spécifique du sucre après pressage se situe entre 1,29 et 1,50 g.cm⁻³. La pression doit être telle qu'on maintienne l'aspect cristallin du sucre. Il ne faut pas non plus que le sucre colle dans la pression, résultant en un mauvais démoulage. Le sucre pressé est ensuite transporté vers une sécherie, de préférence une sécherie à infrarouge où il réside à une température de 65 à 95°C pendant 3 à 10 minutes, ce qui amène la teneur en eau à une valeur de l'ordre de 0,75 à 2%. On laisse ensuite refroidir à une température de 45 à 60°C, température à laquelle le sucre subit une maturation pendant 4 à 9 jours à une humidité relative de 30 à 50%. Après cette maturation, la teneur en eau du sucre est inférieure à 0,3%, de préférence égale ou inférieure à 0,1%.

D'autres sécheries peuvent être employées. Il sera toutefois nécessaire d'adopter les paramètres température-temps pour obtenir à la sortie du sucre présentant une teneur en eau comprise entre 0,75 à 2%.

En fonction de la grandeur des morceaux obtenus lors du pressage et des souhaits du client, on peut décider de broyer le sucre perlé ainsi obtenu, pour obtenir de plus petits morceaux de sucre perlé.

Pour améliorer l'aspect "perle", on pourrait éventuellement décider d'arrondir le sucre perlé obtenu.

Pour obtenir du sucre perlé de dimensions plus uniformes, on peut recourir au tamisage, ce qui permet donc d'obtenir différentes fractions de sucre perlé. Le sucre perlé ainsi obtenu a été comparé à des sucres perlés actuellement sur le marché lors de la préparation de gaufres Liégeoises. Comme on pourra voir dans les exemples, le nouveau sucre perlé se comporte beaucoup mieux, on retrouve toutes les perles après la cuisson et elles n'ont perdu qu'une fraction réduite de leur poids.

Le nouveau sucre perlé est utilisé lors de la préparation de pâtes pour p.e. des pains d'épices, des gaufres par exemple des gaufres de Liège, des gâteaux, des brioches, des craquelins, des gâteaux de Verviers, des pains, des biscuits ou autres produits de boulangerie, de biscuiterie ou de pâtisserie, où les perles sont mélangées à la pâte. On peut aussi utiliser le nouveau sucre perlé pour la décoration de ces mêmes produits, mentionnés ci-dessus.

Par son temps de dissolution long, le nouveau sucre perlé ne se dissout pas et ne se fragmente pas dans la pâte, ce qui permet d'obtenir des produits finis dans lesquels les perles, ayant un aspect cristallin, sont très bien conservées.

Cette faible dissolution du sucre perlé dans la pâte offre des avantages considérables: les pâtes sont plus faciles à travailler, elles ne collent pas lors du pétrissage et lors de la cuisson et elles se lèvent plus facilement, des denrées alimentaires contenant du sucre perlé sont moins colorées et sont sans contours noirs (le sucre dissous provoque une plus forte coloration et des contours noirs).

La haute résistance à l'écrasement rend non seulement le sucre plus manipulable sans formation de poussière, mais a surtout aussi une influence sur le temps de dissolution. En effet, une haute résistance à l'écrasement indique une grande densité des cristaux compactés et donc une structure moins poreuse, qui est plus difficile à dissoudre.

Les exemples qui suivent illustrent l'invention sans toute fois être limitatifs.

### Exemple 1: Préparation du sucre perlé

Du sucre raffiné est humidifié pour atteindre une teneur en eau de 2,2 à 2,4% de type 1 C.E.E., à une température ambiante, après quoi le sucre est compacté dans une presse jusqu'à un poids spécifique d'environ 1,33 g.cm⁻³, variant de 1,3 à 1,35 g.cm⁻³.

Des tests similaires ont été effectués en faisant varier l'humidité du sucre, la température lors de l'humidification et la pression. Dans ces tests, l'humidité du sucre après humidification était de 2%, 2,5%, 3%, 3,5% et de 4%, la température lors de l'humidification était maintenue à 35°C, 50°C, 65°C, 75°C ou 90°C et la pression de compactage variait de telle façon que le poids spécifique du sucre compacté variait de 1,29 à 1,50 g.cm⁻³. Les sucres de tous ces différents tests ont donné lieu après séchage et maturation, comme décrit ci-après, à un sucre perlé répondant parfaitement aux exigences commerciales.

Le sucre compacté qui peut se présenter sous différentes formes, est transporté vers une sécherie à infrarouge, où il est séché pendant environ 5 minutes à une température comprise entre 80 et 90°C. A la sortie de la sécherie, le sucre contient de 1,1 à 1,3% d'eau.

Après séchage, le sucre est transporté vers l'unité de maturation, laquelle se déroule à une température de 50 à 55°C, dans une humidité relative de 35 à 40% pendant 5 jours. A la sortie de la maturation le sucre contient au maximum 0,1% d'eau. Il est évident qu'en fonction de la température de maturation et de l'humidité relative on doit adapter la durée de maturation pour obtenir un sucre perlé ayant une teneur en eau maximale de 0,1%. C'est ainsi qu'on peut faire varier la température entre 45 et 60°C, l'humidité relative entre 30 et 50% et la durée entre 4 et 9 jours.

Le sucre ainsi obtenu peut subir un broyage suivi ou non, d'un arrondissage pour donner aux morceaux un aspect plus arrondi. Le sucre perlé peut, en plus, être tamisé pour obtenir différentes fractions à dimensions plus uniformes, avant d'être conditionné.

Le broyage, arrondissage, tamisage et conditionnement peuvent se faire à l'aide de machines classiques. **Exemple 2: Tests de dissolution, de résistance à l'écrase**

### ment et de coloration

Dans un test de dissolution, de résistance à l'écrasement et de coloration ICUMSA, deux sucres perlés actuellement sur le marché (A et B) ont été comparés au nouveau sucre perlé (C).

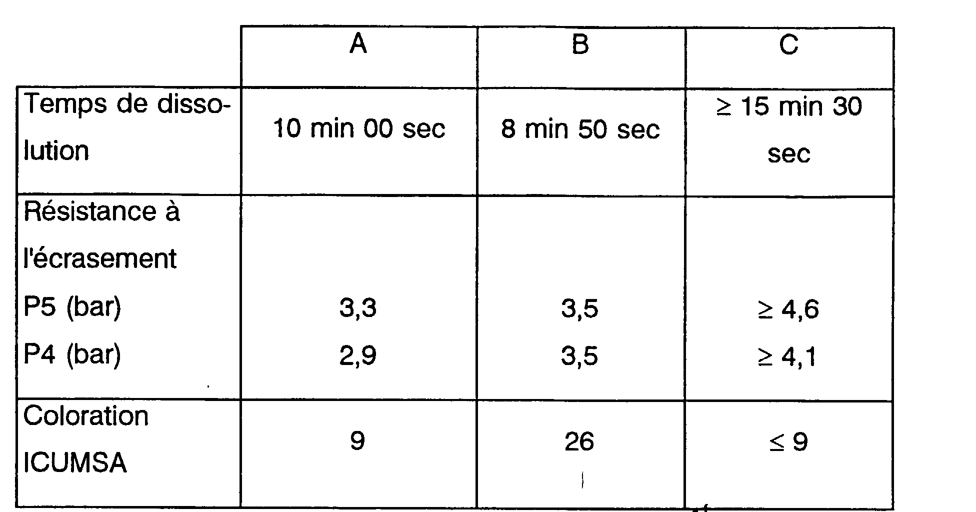

Dans le test de dissolution dans l'eau, on dissout 6 g de perles sur un tamis de 0,4 mm avec une surface de 20,3 cm² dans un gobelet de 600 ml à 20°C.

La résistance à l'écrasement est mesurée en déterminant la pression qu'il faut employer pour enfoncer de 20 mm la masse de sucre contenue dans une capsule cylindrique complètement remplie, ayant un diamètre de 127 mm et une hauteur de 80 mm.

P4 est un sucre dont la granulométrie se situe entre 4 et 8 mm, tandis que P5 a une granulométrie entre 8 et 16 mm.

La coloration ICUMSA est déterminée selon la méthode décrite dans "Sugar Analysis - ICUMSA methods, ed. F. Schneider, 1979, pp. 125-128.

De ces tests, il apparaît clairement que le nouveau sucre perlé obtenu a des propriétés supérieures aux sucres perlés actuels. Il sera donc mieux adapté à être mis en oeuvre dans des denrées alimentaires dans lesquelles on veut maintenir la présence de sucre perlé, telles que les gaufres de Liège, le pain d'épices, des biscuits, des craquelins, des brioches, des gâteaux, des gâteaux de Verviers, etc.

Par sa coloration ICUMSA égale ou inférieure à 9, le sucre perlé satisfait largement aux normes pour être classé comme sucre de haute pureté Type CEE 1. La classe Type CEE 1 va jusqu'à une valeur de coloration ICUMSA de 20.

### Exemple 3: Préparation de gaufres de Liège

Dans cet exemple, on a testé les trois sucres perlés A, B, C pour comparer leur influence sur l'aspect des gaufres.

### Ingrédients:

| | |
|---|---|
| Farine de pâtisserie | 1000 g |
| Sucre perlé | 600 g |
| Beurre | 400 g |
| Trimoline | 100 g |
| Levure | 75 g |
| Sel | 15 g |
| Lait | 35 ml |
| Oeufs | 4 |

### Procédé:

La préparation des gaufres se fait en deux étapes. Dans une première étape, on prépare la pâte de base en mélangeant les oeufs, la levure, le lait qu'on a chauffé à l'avance, la trimoline qui est du sucre inverti ayant une teneur en matière sèche d'environ 80%, et deux tiers de la farine. Le tout est pétri dans un mélangeur Hobart; après on laisse la pâte se lever jusqu'au double de son volume initial.

Dans la seconde étape, on ajoute le reste de la farine, le sel et le beurre. On pétrit à nouveau la pâte au mélangeur Kenwood pendant 15 minutes. On ajoute le sucre perlé à la pâte et on répartit les grains en surface d'une façon homogène. On fait des boules de pâte d'environ 110 g qu'on pose sur une plaque, saupoudrée à la farine. On laisse la pâte se lever pendant 20 minutes. Finalement, on cuit les boules de pâte dans un fer à gaufres pendant trois minutes à une température de 170°C.

En comparant les gaufres obtenues avec les trois sucres perlés, on peut facilement voir que les gaufres préparées avec le perlé C sont moins colorées, leurs contours étant moins noirs et les perles semblent avoir mieux gardé leur grandeur initiale et on n'observe pas de différence dans la structure des gaufres.

### Exemple 4: Mesure de la perte en sucre des perlés lors de la préparation des gaufres de Liège

Pour mieux quantifier la perte en sucre des perlés lors de la préparation des gaufres de Liège, on a légèrement adapté la préparation décrite dans l'exemple 3: on n'a pas ajouté de sucre perlé lors de l'étape deux et au lieu des boules, on a fait des bâtons dans lesquels on a introduit 10 perles. Après la cuisson, on a soigneusement retiré le sucre qui restait en forme cristalline. Dans le tableau ci-dessous sont repris les résultats obtenus avec les trois sucres perlés.

| Sucre perlé | Poids initial des dix perles | Perles retrouvées | Poids total du sucre récupéré | Poids perles retrouvées |
|---|---|---|---|---|
| A | 4,17 g | 10 | 3,20 g (76,7%) | 2,99 g (71,7%) |
| B | 5,12 g | 5 | 2,32 g (45,3%) | 1,40 g (27,3%) |
| C | 5,56 g | 10 | 4,98 g (89,5%) | 4,98 g (89,5%) |

Il apparaît clairement que le sucre perlé B est de loin le moins performant: seulement 5 des 10 perles ont été retrouvées, ne représentant que 27,3% du poids initial des perles.

Par contre, le sucre perlé C est nettement le meilleur: toutes les perles ont été retrouvées dans un bon état, représentant 88,3% du poids initial.

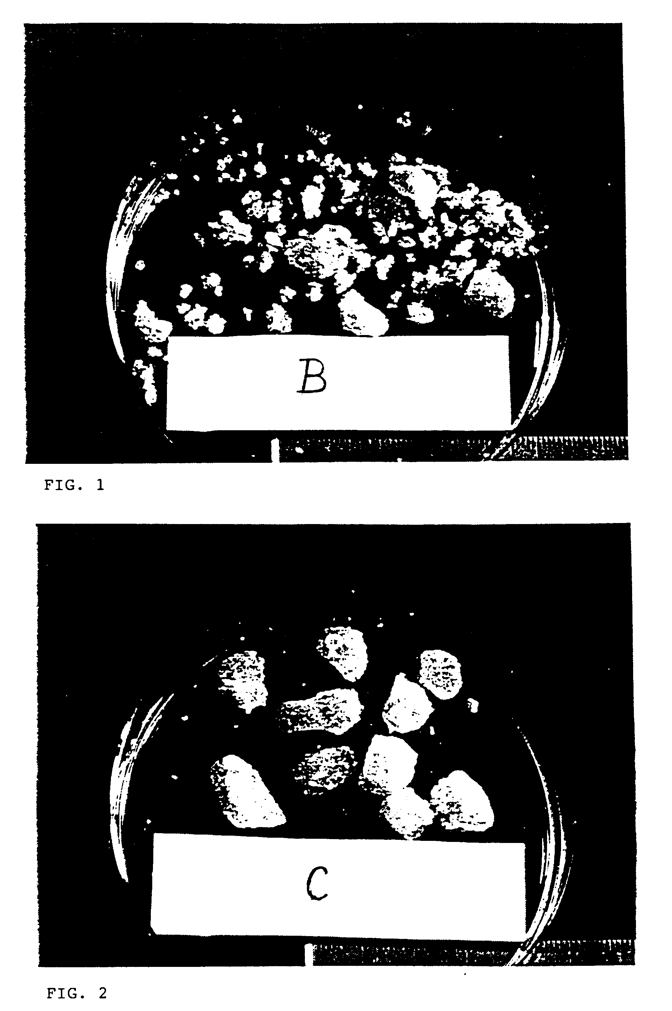

Pour encore mieux illustrer la différence entre les sucres perlés B et C, on a joint dans les figures 1 et 2 annexées, une reproduction des photos prises du sucre perlé B et C récupérés après cuisson.

Les propriétés du sucre perlé revendiqué ont pour effet de réduire, ainsi que les exemples l'indiquent, la dissolution du sucre dans les denrées alimentaires, qui dès lors ont une tendance moins marquée à se colorer lors de la cuisson.

Les paramètres indiqués dans les revendications sont nécessaires pour réaliser cet effet qui, avec le maintien des perles en bon état, est souhaité par le consommateur.

## Revendications

1. Sucre perlé convenant pour la préparation de denrées alimentaires en maintenant l'apparence du sucre perlé, caractérisé en ce qu'il présente un temps de dissolution dans l'eau, supérieur à 12 minutes, determiné par le test de l'exemple II, et un aspect cristallin.

2. Sucre perlé selon la revendication 1 présentant une résistance à l'écrasement minimale de 4 bar.

3. Sucre perlé selon la revendication 1 ou 2 présentant une coloration ICUMSA maximale de 20.

4. Procédé de fabrication de sucre perlé selon l'une quelconque des revendications 1 à 3, caractérisé en ce qu'il consiste en un compactage du sucre ayant une teneur en eau comprise entre 2 à 4,5%, pour obtenir un poids spécifique compris entre 1,29 et 1,50 g.cm⁻³ et une maturation du sucre ayant une teneur en eau de 0,75 à 2%.

5. Procédé de fabrication de sucre perlé selon la revendication 4 caractérisé en ce qu'on procède à une humidification du sucre avant le compactage pour obtenir une teneur en eau du sucre comprise entre 2 et 4,5%.

6. Procédé de fabrication du sucre perlé selon l'une quelconque des revendications 4 ou 5 caractérisé en ce qu'on procède à un séchage du sucre compacté avant maturation pour obtenir une teneur en eau de 0,75 à 2%.

7. Utilisation du sucre perlé selon l'une quelconque des revendications 1 à 3 dans des denrées alimentaires ou pour la décoration des denrées alimentaires ou dans les préparations pour produire ces denrées alimentaires.

8. Utilisation du sucre perlé selon la revendication 7 dans laquelle les denrées alimentaires sont des gaufres du type des gaufres de Liège ou des pains d'épices ou des gâteaux ou des gâteaux de Verviers ou des brioches ou des craquelins ou des pains ou des biscuits ou autres produits de boulangerie, de biscuiterie ou de pâtisserie.

9. Utilisation du sucre perlé selon la revendication 7 dans laquelle le sucre perlé est utilisé pour la décoration de biscuits, de pâtes crues, de gâteaux, de gâteaux de Verviers, de pains d'épices, de pains ou autres produits de boulangerie, de biscuiterie ou de pâtisserie.

10. Denrées alimentaires ou préparations pour obtenir ces denrées alimentaires décorées avec ou contenant du sucre perlé selon l'une quelconque des revendications 1 à 3.

11. Denrées alimentaires selon la revendication 10 sous forme de biscuits, de pâtes crues, de gâteaux, de gâteaux de Verviers, de pains d'épices, de gaufres comme par exemple des gaufres de Liège, de brioches, de craquelins, de pains, de biscuits ou d'autres produits de boulangerie, de biscuiterie ou de pâtisserie.

## Patentansprüche

1. Perlzucker, der sich für die Zubereitung von Nahrungsmitteln eignet, bei der das Aussehen des Perlzuckers erhalten bleibt, dadurch gekennzeichnet, daß er eine gemäß dem Test von Beispiel 2 bestimmte Zeit für die Auflösung in Wasser von mehr als 12 Minuten hat, und ein kristallines Aussehen aufweist.

2. Perlzucker gemäß Anspruch 1, der eine minimale Druckfestigkeit von 4 bar aufweist.

3. Perlzucker gemäß Anspruch 1 oder 2, der eine maximale ICUMSA-Färbung von 20 aufweist.

4. Verfahren zur Herstellung von Perlzucker gemäß irgendeinem der Ansprüche 1 bis 3, dadurch gekennzeichnet, daß es aus einer Verdichtung des einen Wassergehalt zwischen 2 und 4,5% aufweisenden Zuckers besteht, um ein spezifisches Gewicht zwischen 1,29 und 1,50 g.cm⁻³ zu erhalten, und einer Reifung des einen Wassergehalt von 0,75 bis 2% aufweisenden Zuckers besteht.

5. Verfahren zur Herstellung von Perlzucker gemäß Anspruch 4, dadurch gekennzeichnet, daß vor der Verdichtung eine Anfeuchtung des Zuckers vorgenommen wird, um einen Wassergehalt des Zuckers zwischen 2 und 4,5% zu erhalten.

6. Verfahren zur Herstellung des Perlzuckers gemäß irgendeinem der Ansprüche 4 oder 5, dadurch gekennzeichnet, daß eine Trocknung des verdichteten Zuckers vor der Reifung vorgenommen wird, um einen Wassergehalt von 0,75 bis 2% zu erhalten.

7. Verwendung des Perlzuckers gemäß irgendeinem der Ansprüche 1 bis 3 in Nahrungsmitteln oder zur Verzierung der Nahrungsmittel, oder in den vorbereiteten Erzeugnissen zur Herstellung dieser Nahrungsmittel.

8. Verwendung des Perlzuckers gemäß Anspruch 7, wobei die Nahrungsmittel Waffeln von der Art der Lütticher Waffeln, oder Honigkuchen oder Kuchen oder Vervierser Kuchen oder Brioches oder Craquelins oder Brote oder Kekse oder andere Bäckerei-, Keksfabrik- oder Konditoreierzeugnisse sind.

9. Verwendung des Perlzuckers gemäß Anspruch 7, wobei der Perlzucker zur Verzierung von Keksen, rohem Teig, Kuchen, Vervierser Kuchen, Honigkuchen, Brot oder anderen Bäckerei-, Keksfabrik- oder Konditoreierzeugnissen verwendet wird.

10. Nahrungsmittel oder vorbereitete Erzeugnisse, um diese mit Perlzucker gemäß irgendeinem der Ansprüche 1 bis 3 verzierten oder Perlzucker gemäß irgendeinem der Ansprüche 1 bis 3 enthaltenden Nahrungsmittel zu erhalten.

11. Nahrungsmittel gemäß Anspruch 10 in Form von Keksen, rohem Teig, Kuchen, Vervierser Kuchen, Honigkuchen, Waffeln wie beispielsweise Lütticher Waffeln, Brioches, Craquelins, Brot, Keksen oder anderen Bäckerei-, Keksfabrik- oder Konditoreierzeugnissen.

## Claims

1. Pearl sugar convenient for preparing foodstuffs while maintaining the pearl sugar appearance, characterized in that it has a dissolution time in water higher than 12 minutes, as defined in example 2, and a crystalline aspect.

2. Pearl sugar according to claim 1, having a minimum crushing strength of 4 bar.

3. Pearl sugar according to claim 1 or 2, having a maximum ICUMSA colouration of 20.

4. Process for producing pearl sugar according to any of claims 1 to 3, characterized in that it consists in compacting sugar having a water content between 2 and 4.5% so as to obtain a specific weight comprised between 1.29 and 1.50 g.cm⁻³ and a sugar maturation having a water content of 0.75 to 2%.

5. Process for producing pearl sugar according to claim 4, characterized in that an humidification of the sugar is carried out before compacting to obtain a water content of the sugar of 2 to 4.5%.

6. Process for producing pearl sugar according to any of claims 4 or 5, characterized in that the compacted sugar is dried before maturation so as to obtain a water content of 0.75 to 2%.

7. Use of pearl sugar according to any of claims 1 to 3 in foodstuffs or for decoration of foodstuffs or in preparations to produce those foodstuffs.

8. Use of pearl sugar according to claim 7, wherein the foodstuffs are waffles such as Belgian Liege wafels or gingerbreads or cakes or Belgian Verviers cakes or brioches or Belgian craquelins or breads or biscuits or other bakery, biscuit or pastry products.

9. Use of pearl sugar according to claim 7 wherein the pearl sugar is used for decoration of biscuits, crude pastes, cakes, Belgian Verviers cakes, gingerbreads, breads or other bakery, biscuit or pastry products.

10. Foodstuffs or preparations to obtain those foodstuffs decorated with, or containing, pearl sugar according to any of claims 1 to 3.

11. Foodstuffs according to claim 10, as biscuits, crude pastes, cakes, Belgian Verviers cakes, gingerbreads, wafels such as, for example, Belgian Liege wafels, brioches, Belgian craquelins, breads, biscuits or other bakery, biscuit or pastry products.
